# EUROPÄISCHE PATENTANMELDUNG

(11) **EP 1 240 877 A2**
(43) Veröffentlichungstag der Anmeldung: **18.09.2002**
(21) Anmeldenummer: 01130176.9
(22) Anmeldetag: 19.12.2001
(51) Int. Cl.: A61C 13/00, A61C 13/20, A61C 5/10, B22F 3/14

(54) **Verfahren zur Herstellung einer Vorform für Dentalerzeugnisse**

(30) Priorität: 15.03.2001 DE 10112434
(71) Anmelder: BT -Magnettechnologie GmbH, 44601 Herne (DE)
(72) Erfinder: Schneider, Rudolf, 58730 Froendenberg (DE); Rudzinski-Lorenzen, Ralf, 59379 Selm-Bork (DE)
(74) Vertreter: Behrens, Ralf-Holger

(57) **Zusammenfassung**

Es wird ein Verfahren zur Herstellung einer Vorform für Dentalerzeugnisse vorgeschlagen, bei dem ein pulverförmiger Ausgangsstoff
- in einem Formwerkzeug mechanisch verdichtet und mindestens einem elektrischen Stromimpuls ausgesetzt wird,
- aus dem Formwerkzeug entformt wird, und
- einer Wärmebehandlung unterzogen wird.

## Beschreibung

### Stand der Technik

Die Erfindung betrifft ein Verfahren zur Herstellung einer Vorform für Dentalerzeugnisse.

Dentalerzeugnisse, insbesondere Dentalgußerzeugnissen, wie beispielsweise Inlays oder Brücken, und Aufbauteile für Implantate, werden üblicherweise aus Dentallegierungen hergestellt. Dentallegierungen stehen in der Regel in Form von Halbzeugen zur Weiterverarbeitung zur Verfügung. Hierbei werden die Halbzeuge zu Dentalgußerzeugnissen gegossen und/oder mechanisch bearbeitet.

Ein Verfahren der einleitend genannten Art ist aus der deutschen Offenlegungsschrift DE 198 19 715 A1 bekannt. Bei diesem Verfahren wird ein als pulverförmige Legierung vorliegender Ausgangsstoff mittels Pressen kompaktiert. Dies erfolgt dadurch, daß der Ausgangsstoff, versetzt mit Preßhilfsmittel, in eine Form gefüllt und dann kalt- oder warmverpreßt wird. Der so erhaltene Formkörper bzw. Grünling erfährt anschließend eine Sinterung. Die Temperatur wird unterhalb der Schmelztemperatur der Legierung gewählt. So entsteht ein zusammenhängender, fester Werkstoff, der ein gesintertes Halbzeug darstellt, das von einem Zahntechniker als Gußwerkstoff für Dentalerzeugnisse eingesetzt werden kann, um beispielsweise eine Krone, eine Brücke, ein Inley, ein Onley oder einen Modellguß herzustellen. Bei diesem Verfahren sind hohe Sintertemperaturen und lange Sinterzeiten erforderlich.

Weiterhin ist aus der deutschen Patentschrift DE 44 07 593 C1 ein Verfahren zur Herstellung von Pulverpreßlingen hoher Dichte bekannt. Bei diesem Verfahren wird ein leitfähiger pulverförmiger Ausgangsstoff in einem Formwerkzeug mechanisch verdichtet und mindestens einem elektrischen Stromimpuls ausgesetzt. Der Stromimpuls weist eine elektrische Ladung zwischen 13 und 500 As auf. Der so hergestellte Pulverpreßling weist noch keine Sinterbrücken auf.

### Vorteile der Erfindung

Das erfindungsgemäße Verfahren zur Herstellung einer Vorform für Dentalerzeugnisse, bei welchem ein pulverförmiger Ausgangsstoff in einem Formwerkzeug mechanisch verdichtet und mindestens einem elektrischen Stromimpuls, vorzugsweise mit einer elektrischen Ladung zwischen 600 As und 900 As, ausgesetzt wird, aus dem Formwerkzeug entformt und einer Wärmebehandlung unterzogen wird, bietet dem gegenüber den Vorteil, daß bei dem so hergestellten Halbzeug aufgrund der gewählten Herstellungsparameter, d.h. aufgrund der gewählten elektrischen Ladung des elektrischen Stromimpulses und der anschließenden Wärmebehandlung, eine ausreichende Sinterbrückenbildung entstanden ist, die bereits eine sehr hohe chemische Beständigkeit sicherstellt.

Der gemäß dem Verfahren nach der Erfindung hergestellte Werkstoff weist vorteilhafterweise zudem eine hohe Raumerfüllung und eine gute Homogenität auf.

Das Verfahren nach der Erfindung eignet sich insbesondere zur Herstellung einer Vorform für Dentalgußerzeugnisse, wie beispielsweise Kronen, Brücken, Modellgüsse, Inlays, Onlays oder Suprakonstruktionen.

Die Vorform bzw. der erfindungsgemäß hergestellte Werkstoff kann aber bei einer weiteren vorteilhaften Verwendung auch zur mechanischen Weiterbearbeitung bei der Herstellung von Implantataufbauteilen eingesetzt werden.

Der pulverförmige Ausgangsstoff sollte eine elektrische Leitfähigkeit aufweisen. Nach der Erfindung ist ein besonders bevorzugter pulverförmiger Ausgangsstoff eine elektrisch leitfähige Legierung oder ein Metall wie eine CoCrMoW-Legierung, welche sich insbesondere zum Einsatz bei Dentalgußerzeugnissen eignet.

Bevorzugt wird ein elektrischer Stromimpuls mit einer elektrischen Ladung von 650 As bis 780 As, besonders bevorzugt 700 As bis 740 As eingesetzt.

Die Scheitelstromhöhe des elektrischen Impulses beträgt bei dem Verfahren nach der Erfindung vorzugsweise 130 kA bis 180 kA, insbesondere 150 kA bis 160 kA.

Bereits bei den gewählten Wärmebehandlungsbedingungen von 850°C bis 1120°C zeigt sich eine hohe Versinterung der einzelnen Pulverteilchen, die sich z.B. auch in einer hohen chemischen Beständigkeit niederschlägt. Die Wärmebehandlung, die nach dem Entformen mit dem freigelegten Grünling erfolgt, kann beispielsweise in einem Durchlaufwärmebehandlungsofen erfolgen. Die Temperaturen sind gegenüber herkömmlichen Hochtemperatursinterverfahren, bei denen bei vergleichbaren Werkstoffen Temperaturen zwischen 1250°C und 1350°C herrschen, relativ gemäßigt. Dies führt wiederum zu einem geringen Energieverbrauch, was sich wiederum positiv in den Kosten des gefertigten Halbzeugs niederschlägt.

Die Wärmebehandlung erfolgt bei dem erfindungsgemäßen Verfahren zweckmäßig für eine Zeitdauer zwischen 10 und 20 Minuten, d.h. schon nach einer kurzen Wärmebehandlung wird ein gutes Resultat erzielt.

Um chemische Reaktionen des Grünlings mit seiner Umgebung zu verhindern, wird die Wärmebehandlung zweckmäßig unter einer Schutzgasatmosphäre durchgeführt. Dabei handelt es sich vorzugsweise um eine H₂/N₂-Schutzgasatmosphäre, wobei der H₂-Gehalt der Schutzgasatmosphäre vorzugsweise zwischen 5 % und 10 % liegt.

Die Teilchengröße des pulverförmigen Ausgangsstoffs, welcher bei dem erfindungsgemäßen Verfahren zum Einsatz kommt, liegt zwischen 10 µm und 400 µm, vorzugsweise 45 µm bis 300 µm.

Der pulverförmige Ausgangsstoff wird bei der mechanischen Verdichtung beispielweise einem Druck zwischen 400 MPa und 800 MPa ausgesetzt.

Weitere Vorteile und vorteilhafte Weiterbildungen des Gegenstandes nach der Erfindung ergeben sich aus der Beschreibung und den Patentansprüchen.

Eine bevorzugte Ausführung des Verfahrens nach der Erfindung wird nachfolgend anhand eines Ausführungsbeispiels näher erläutert.

### Beschreibung des Ausführungsbeispiels

Den Ausgangsstoff bildet bei diesem Ausführungsbeispiel eine nach einem üblichen Verfahren, beispielsweise durch Verdüsen einer Schmelze hergestellte CoCrMoW-Legierung, die pulverförmig ist und deren Teilchengröße zwischen 45 µm und 300 µm liegt.

Der pulverförmige Ausgangsstoff, welcher elektrisch leitend ist, wird als Preßgut in eine Matrize einer beispielsweise hydraulischen Presse eingebracht. Eine solche Presse verfügt über zwei parallel ausgerichtete Preßstempel, die elektrische Leitfähigkeit aufweisen. Mittels der Preßstempel wird der pulverförmige Ausgangsstoff dann mit einem statischen Druck von 600 MPa beaufschlagt und somit vorverdichtet.

Gleichzeitig wird an den Preßstempeln eine elektrische Spannung von beispielsweise 12 V angelegt. Über die Preßstempel, die kondensatorartig ausgebildet sind und über das aus dem pulverförmigen Ausgangsstoff bestehende Preßgut entladen werden, wird das pulverförmige Material so einem elektrischen Stromimpuls mit einer Scheitelstromhöhe von 150 kA und einer elektrischen Ladung von 700 As ausgesetzt. Die Entladungszeit, beträgt bei dem vorliegenden Beispiel 4,7·10⁻³ s.

Nach den genannten Arbeitsschritten wird der entstandene Grünling aus dem hydraulischen Preßwerkzeug entformt und auf einen Warenträger gelegt. Der Warenträger wird dann mit dem freigelegten Grünling durch einen Durchlaufwärmebehandlungsofen gefahren, wobei in dem Wärmebehandlungsofen eine Temperatur von etwa 1000°C herrscht. Die Wärmebehandlung erfolgt für eine verhältnismäßig kurze Zeitdauer von 15 Minuten unter einer Schutzgasatmosphäre, wobei als Schutzgas ein H₂/N₂-Gasgemisch mit einem H₂-Gehalt von etwa 5 % gewählt wird.

Nach Durchlauf des Wärmebehandlungsofens wird das nun verdichtete und wärmebehandelte Formteil einem Oberflächenfinish zugeführt, mittels dessen eine Vorform für Dentalgußerzeugnisse fertiggestellt wird.

Die fertige Vorform weist eine Dichte von etwa 8,45 g/cm³ auf. Bei einem Ätzversuch in einer Lösung aus HNO₃ plus HCl plus FeCl₃ zeigt die Vorform nach 10 Minuten Verweilzeit in der Lösung keine Ätzangriffe auf, was für die Güte der Vorform spricht.

## Patentansprüche

1. Verfahren zur Herstellung einer Vorform für Dentalerzeugnisse, **dadurch gekennzeichnet, daß** ein pulverförmiger Ausgangsstoff
- in einem Formwerkzeug mechanisch verdichtet und mindestens einem elektrischen Stromimpuls ausgesetzt wird,
- aus dem Formwerkzeug entformt wird, und
- einer Wärmebehandlung unterzogen wird.

2. Verfahren nach Anspruch 1, **dadurch gekennzeichnet, daß** der elektrische Stromimpuls eine Scheitelstromhöhe in einem Bereich zwischen 130 kA und 180 kA, insbesondere 150 kA bis 160 kA, aufweist.

3. Verfahren nach Anspruch 1 oder 2, **dadurch gekennzeichnet, daß** die Wärmebehandlung bei einer Temperatur zwischen 850°C und 1120°C erfolgt.

4. Verfahren nach einem der Ansprüche 1 bis 3, **dadurch gekennzeichnet, daß** die Wärmebehandlung für eine Zeitdauer zwischen 10 und 20 Minuten erfolgt.

5. Verfahren nach einem der Ansprüche 1 bis 4, **dadurch gekennzeichnet, daß** die Wärmebehandlung unter einer Schutzgasatmosphäre, erfolgt.

6. Verfahren nach Anspruch 5, **dadurch gekennzeichnet, daß** die Schutzgasatmosphäre eine H₂/N₂-Schutzgasatmosphäre darstellt.

7. Verfahren nach Anspruch 5 oder 6, **dadurch gekennzeichnet, daß** der H₂-Gehalt der Schutzgasatmosphäre zwischen 5 % und 10 % liegt.

8. Verfahren nach einem der Ansprüche 1 bis 7, **dadurch gekennzeichnet, daß** die Teilchengröße des pulverförmigen Ausgangsstoffs in einem Bereich zwischen 10 µm und 400 µm, insbesondere 45 µm bis 300 µm liegt.

9. Verfahren nach einem der Ansprüche 1 bis 8, **dadurch gekennzeichnet, daß** der pulverförmige Ausgangsstoff eine Metalllegierung, insbesondere eine CoCrMoW-Legierung, ist.

10. Verfahren nach einem der Ansprüche 1 bis 9, **dadurch gekennzeichnet, daß** der pulverförmige Ausgangsstoff mit einem statischen Druck von 400 MPa bis 800 MPa verdichtet wird.

11. Verfahren nach einem der Ansprüche 1 bis 10, **dadurch gekennzeichnet, dass** ein elektrischer Stromimpuls mit einer elektrischen Ladung zwischen 600 As bis 900 As, insbesondere 650 As bis 780 As, eingesetzt wird.
